# EUROPÄISCHE PATENTSCHRIFT

(11) **EP 2 066 202 B1**
(45) Veröffentlichungstag und Bekanntmachung des Hinweises auf die Patenterteilung: **23.12.2009**
(21) Anmeldenummer: 07802960.0
(22) Anmeldetag: 28.08.2007
(51) Int. Cl.: A47J 42/56

(54) **KÜCHENMASCHINE MIT SCHWENKBAREM DECKEL ZUM ABDECKEN EINER KUPPLUNGSSTELLE**
FOOD PROCESSOR COMPRISING A PIVOTABLE COVER FOR COVERING A COUPLING POINT
ROBOT MÉNAGER COMPORTANT UN CAPUCHON PIVOTANT CONÇU POUR RECOUVRIR UN POINT D'ACCOUPLEMENT

(30) Priorität: 13.09.2006 DE 102006042981
(43) Veröffentlichungstag der Anmeldung: 10.06.2009
(73) Patentinhaber: BSH Bosch und Siemens Hausgeräte GmbH, 81739 München (DE)
(72) Erfinder: ZIBRET, Igor, 3327 Smartno Ob Paki (SI); BRECKO, Ales, 1241 Kamnik (SI); BLAGOTINSEK, Andrej, 2380 Slovenj Gradec (SI); MAZEJ, Stanislav, 3303 Gomilsko (SI)
(86) Internationale Anmeldenummer: PCT/EP2007/058943
(87) Internationale Veröffentlichungsnummer: WO 2008/031722

(56) Entgegenhaltungen:
- EP-A1- 1 493 369
- EP-A1- 1 535 558

## Beschreibung

### Hintergrund der Erfindung

Die vorliegende Erfindung betrifft eine Küchenmaschine mit einer Kupplungsstelle und einem Deckel zum Abdecken der Kupplungsstelle gemäß dem Oberbegriff des Anspruchs 1. Sie betrifft außerdem ein Verfahren zum Öffnen eines Deckels einer Kupplungsstelle gemäß dem Oberbegriff des Anspruchs 15. Schließlich betrifft sie ein Verfahren zum Schließen eines Deckels einer Kupplungsstelle gemäß dem Oberbegriff des Anspruchs 16.

### Stand der Technik

Aus dem Stand der Technik ist die Küchenmaschine MK5 der Bosch und Siemens Hausgeräte GmbH bekannt, die zwei Kupplungsstellen für Bearbeitungsgeräte aufweist. An jeder Kupplungsstelle ragt eine durch einen Motor angetriebene Welle heraus, um ein Werkzeug eines Bearbeitungsgeräts rotierend anzutreiben. Eine der Kupplungsstellen kann durch einen einfachen abnehmbaren und wiederaufsetzbaren Deckel abgedeckt werden, wenn sie nicht gebraucht wird. So soll vermieden werden, dass sich ein Benutzer beim Betrieb der Küchenmaschine an der rotierenden Welle oder dem Werkzeug verletzt. Hierzu ist weiter ein Schutzmechanismus vorgesehen, der die Stromversorgung des Motors unterbricht, wenn auf der Kupplungsstelle weder ein Bearbeitungsgerät noch der Deckel angebracht ist.

Auch aus der europäischen Patentanmeldung EP 1535558 A1 ist eine Küchenmaschine mit zwei Kupplungsstellen für Bearbeitungsgeräte bekannt, von denen eine mit einem Deckel abdeckbar ist. Der Deckel ist um eine Gelenkachse schwenkbar am Gehäuse befestigt, sodass er von einer geschlossenen Stellung, in der er die Kupplungsstelle abdeckt, in eine offene Stellung geschwenkt werden kann, in der das Bearbeitungsgerät auf die Kupplungsstelle aufgesetzt werden kann. Der Deckel weist auf seiner Unterseite eine Lasche mit einem Verankerungselement auf, das bei geschlossenem Deckel in eine Einbuchtung in Gehäuse eingreift. Dort wird sie von einem Rückhalteelement festgehalten, um den Deckel in seiner geschlossenen Stellung zu halten. Das Rückhalteelement ist mit einem von außen bedienbaren Entriegelungsknopf verbunden. Durch Betätigen des Entriegelungsknopfs wird das Verankerungselement gegen die Kraft eines elastischen Rückstellelements des Rückhalteelements freigegeben und der Deckel schwenkt angetrieben durch ein weiteres elastisches Rückstellelement in der Nähe der Gelenkachse selbsttätig in seine offene Stellung.

### Der Erfindung zugrundeliegende Aufgabe

An der Küchenmaschine MK5 der Bosch und Siemens Hausgeräte GmbH kann nachteilig sein, dass der Deckel verloren gehen kann, weil er zum Öffnen von der Küchenmaschine gelöst wird. Das kann dazu führen, dass die Maschine ständig mit auf dieser Kupplungsstelle aufgesetztem Bearbeitungsgerät betrieben wird, selbst wenn das Bearbeitungsgerät gar nicht gebraucht wird, was unter anderem einen erhöhten Stromverbrauch, einen schnelleren Verschleiß und eine größere Lärmentwicklung nach sich ziehen kann. Bei der aus EP 1535558 A1 bekannten Küchenmaschine wird eine Abhandenkommen des Deckels dadurch vermieden, dass der Deckel am Gehäuse befestigt ist. Jedoch ist der Verschlussmechanismus zum Öffnen und Schließen des Deckels vor dem Anbringen bzw. nach dem entfernen eines Bearbeitungsgeräts aufwändig. Dies kann sich in den Herstellungskosten der Maschine ungünstig niederschlagen.

Der vorliegenden Erfindung liegt deshalb die Aufgabe zugrunde, eine Küchenmaschine mit einem Deckel bereitzustellen, der nicht verloren gehen kann, und die gleichzeitig einfach und kostengünstig herzustellen ist.

### Erfindungsgemäße Lösung

Zu Lösung der Aufgabe lehrt die Erfindung eine Küchenmaschine mit einer Kupplungsstelle und einem Deckel zum Abdecken der Kupplungsstelle mit den Merkmalen des Anspruchs 1. Sie lehrt außerdem ein Verfahren zum Öffnen eines Deckels einer Kupplungsstelle mit den Merkmalen des Anspruchs 15. Schließlich lehrt sie ein Verfahren zum Schließen eines Deckels einer Kupplungsstelle mit den Merkmalen des Anspruchs 16.

Dadurch, dass der Deckel nicht nur schwenkbar ist, sondern auch verschiebbar, kann ein Benutzer den Deckel bequem durch ein Verschieben zunächst vom Gehäuse lösen und dann manuell aufklappen. Ein komplizierter Verschlussmechanismus ist nicht nötig.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Ein bevorzugter Deckel ist von einer Stellung, in der er die Kupplungsstelle verschließt, in eine relativ zum Gehäuse verschobene Zwischenstellung verschiebbar. Durch diese Ausführung der Erfindung lässt sich erreichen, dass ein Griffabschnitt im geschlossenen Zustand des Deckels vorteilhaft versteckt ist. Vorzugsweise weist der Deckel deshalb einen ersten Griffabschnitt auf, der durch das Verschieben von außen zugänglich gemacht werden kann. In einer bevorzugten Ausführung der Erfindung kann ein Benutzer an den ersten Griffabschnitt angreifen, um den Deckel um die Schwenkachse in seine geöffnete Stellung zu schwenken. Der erste Griffabschnitt liegt vorzugsweise an einem von der Schwenkachse des Deckels entfernten Punkt. Besonders vorzugsweise liegt der Griffabschnitt auf der dem Benutzer bei normaler Verwendung der Küchenmaschine zugewandten Seite des Deckels, damit der Benutzer ihn bequem erkennen und handhaben kann.

Die Verbindungseinrichtung ist vorzugsweise so angeordnet und eingerichtet, dass der Deckel aus einer Position, in der er die Kupplungsstelle verschließt, senkrecht zu seiner Ebene von der Kupplungsstelle in die Zwischenstellung anhebbar ist. Mit anderen Worten, das bevorzugte Verschieben erfolgt senkrecht zur Ebene des Deckels, sodass dieser in die Zwischenstellung angehoben wird. Vorzugsweise schließt der Deckel in seiner geschlossenen Position bündig mit dem Gehäuse ab, während er in der angehobenen Stellung über des Gehäuse hinausragt. Das bündige Abschließen kann vorteilhaft die Reinigung der Maschine erleichtern. Es kann außerdem das äußere Erscheinungsbild der Maschine verbessern.

Vorzugsweise ist an dem Deckel ein zweiter Griffabschnitt angeordnet, an den der Benutzer angreifen kann, um den Deckel zu verschieben. Der zweite Griffabschnitt liegt dazu vorzugsweise in der Nähe der Schwenkachse des Deckels. Besonders vorzugsweise liegt der Griffabschnitt auf der dem Benutzer bei normaler Verwendung der Küchenmaschine abgewandten Seite des Deckels. Der Deckel kann besonders vorzugsweise mit Hilfe des zweiten Griffabschnitts angehoben werden indem der Benutzer an den Griffabschnitt angreift und den Deckel nach oben zieht.

Die bevorzugte Verbindungseinrichtung weist einen Zapfen auf einem Element aus der Gruppe Gehäuse und Deckel auf. Außerdem weist sie vorzugsweise ein Langloch auf dem anderen der beiden Elemente auf. Der Zapfen greift vorzugsweise so in das Langloch ein, dass die beiden Elemente um die Achse des Zapfens relativ zueinander verschwenkbar und in Längsrichtung des Langlochs relativ zueinander verschiebbar sind. So lassen sich auf einfache Weise die Schwenk- und die Verschiebefunktion in der Verbindungseinrichtung integrieren.

Das Langloch ist vorzugsweise am Deckel angeordnet, während der Zapfen am Gehäuse angebracht ist. Ein bevorzugtes Langloch erstreckt sich senkrecht zur Schwenkachse, sodass der Zapfen im Langloch in eine Richtung senkrecht zur Schwenkachse verschiebbar ist. Besonders vorzugsweise erstreckt sich das Langloch senkrecht zur Ebene des Deckels, sodass der Zapfen im Langloch in eine Richtung senkrecht zur Ebene des Deckels verschiebbar ist. Zu diesem Zweck befindet sich an der Unterseite eines bevorzugten Deckels ein Vorsprung, der senkrecht von dem Deckel absteht und mit dem Langloch versehen ist.

Das bevorzugte Langloch ist ein Durchloch. Es ist aber auch eine Ausführung der Erfindung denkbar, bei dem das Langloch nur ein Sackloch ist, also eine Nut bildet, in die der Zapfen eingreift. Das kann unter Anderem die Stabilität des Abschnitts des Deckels, der mit dem Langloch versehen ist, erhöhen. Eine bevorzugte Verbindungseinrichtung weist zwei Zapfen auf dem einen Element aus der Gruppe Gehäuse und Deckel und zwei Langlöcher auf dem anderen der beiden Elemente auf. Dies kann ebenfalls die Stabilität der Verbindungseinrichtung erhöhen.

Vorzugsweise ist der Deckel mit einem Verankerungselement ausgestattet und das Gehäuse mit einem Rückhalteelement, sodass das Verankerungselement bei geschlossenem Deckel in das Rückhalteelement greift, um den Deckel lösbar in seiner geschlossenen Stellung zu fixieren. Auf diese Weise kann sichergestellt werden, dass, wie weiter unten beschrieben, ein Vorsprung eines Schutzmechanismus bei geschlossenem Deckel sicher betätigt wird. Verankerungselement und Rückhalteelement können zum Beispiel eine Schnappverbindung bilden. Vorzugsweise ist das Verankerungselement eine Lasche, die an ihrem Ende eine Nase aufweist, die nach Art einer Schnappverbindung in eine Kerbe im Rückhalteelement eingreift.

Das Rückhalteelement und das Verankerungselement wirken vorzugsweise derart zusammen, dass sie durch mäßige Kraftaufwendung voneinander lösbar sind, besonders vorzugsweise durch das Verschieben des Deckels aus seiner geschlossenen Stellung in seine Zwischenstellung. Ein besonders bevorzugtes Verankerungselement ist von dem Rückhalteelement durch ein Anheben des Deckels von der Kupplungsstelle senkrecht zur Ebene des Deckels lösbar. Der Deckel weist vorzugsweise zwei Verankerungselemente auf die bei geschlossenem Deckel in das Rückhalteelement greifen, um den Deckel lösbar in seiner geschlossenen Stellung zu fixieren. Hierdurch kann eine stabilere Fixierung des Deckels in seiner geschlossenen Stellung am Gehäuse der Küchenmaschine ereicht werden. Vorzugsweise sind beide Verankerungselemente von den Rückhalteelementen durch ein Verschieben, besonders vorzugsweise durch ein Anheben, des Deckels von der Kupplungsstelle senkrecht zur Ebene des Deckels in die Zwischenstellung lösbar. In der Zwischenstellung liegt der Deckel vorzugsweise mit seinen Verankerungselementen locker auf dem Rückhalteelement auf.

An der mit dem Deckel ausgestatteten Kupplungsstelle der Küchenmaschine ist vorzugsweise eine Welle angeordnet, um ein Werkzeug des Bearbeitungsgeräts rotierend anzutreiben. Die Welle wird vorzugsweise mit einem Motor, besonders vorzugsweise einem Elektromotor, angetrieben. Eine bevorzugte Küchenmaschine ist außerdem mit einem Schutzmechanismus ausgestattet, um zu vermeiden, dass die Welle betätigt wird, wenn die Kupplungsstelle nicht durch ein Bearbeitungsgerät oder den Deckel abgedeckt ist. Der Schutzmechanismus weist dazu vorzugsweise eine Erfassungseinrichtung auf, um die Anwesenheit oder Abwesenheit des Bearbeitungsgeräts oder des Deckels zu erfassen und abhängig davon die Stromzufuhr zum Motor zu schließen oder zu unterbrechen. Ein bevorzugter Deckel ist mit einem Vorsprung ausgestattet, der bei geschlossenem Deckel eine Erfassungseinrichtung des Schutzmechanismus betätigt, um diesem anzuzeigen, dass die Kupplungsstelle abgedeckt ist. Dadurch, dass mittels der Rückhalte- und Verankerungselemente der Deckel auf dem Gehäuse fixiert werden kann, kann vorteilhaft sichergestellt werden, dass der Vorsprung bei geschlossenem Deckel mit ausreichender Kraft betätigt ist.

### Kurzbeschreibung der Zeichnungen

Die Erfindung wird im Folgenden anhand schematischer Zeichnungen an einem Ausführungsbeispiel mit weiteren Einzelheiten näher erläutert.

### Es zeigen:

- Fig. 1:: Eine Seitenansicht einer erfindungsgemäßen Küchenmaschine;
- Fig. 2:: Eine Ansicht einer erfindungsgemäßen Küchenmaschine von oben;
- Fig. 3:: Eine Schnittansicht einer erfindungsgemäßen Küchenmaschine entlang der Ebene A-A in Fig. 2 bei geöffnetem Deckel;
- Fig. 4:: Eine Schnittansicht einer erfindungsgemäßen Küchenmaschine entlang der Ebene A-A in Fig. 2 bei geschlossenem Deckel;
- Fig. 5:: Eine Illustration des Verfahrens zum Öffnen des Deckels;
- Fig. 6:: Eine Seitenansicht des erfindungsgemäßen Deckels; und
- Fig. 7:: Eine Rückansicht des erfindungsgemäßen Deckels.

### Ausführliche Beschreibung eines Ausführungsbeispiels

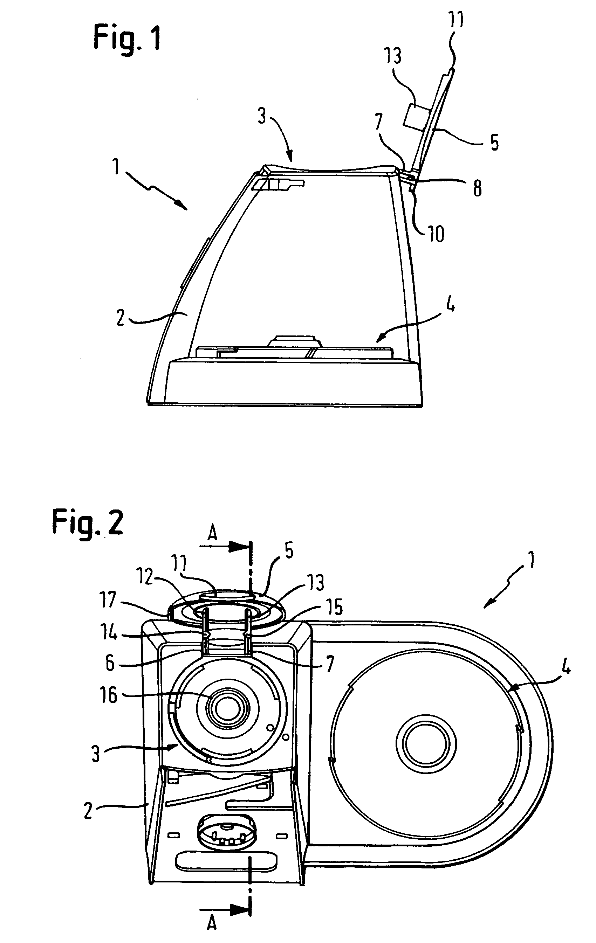

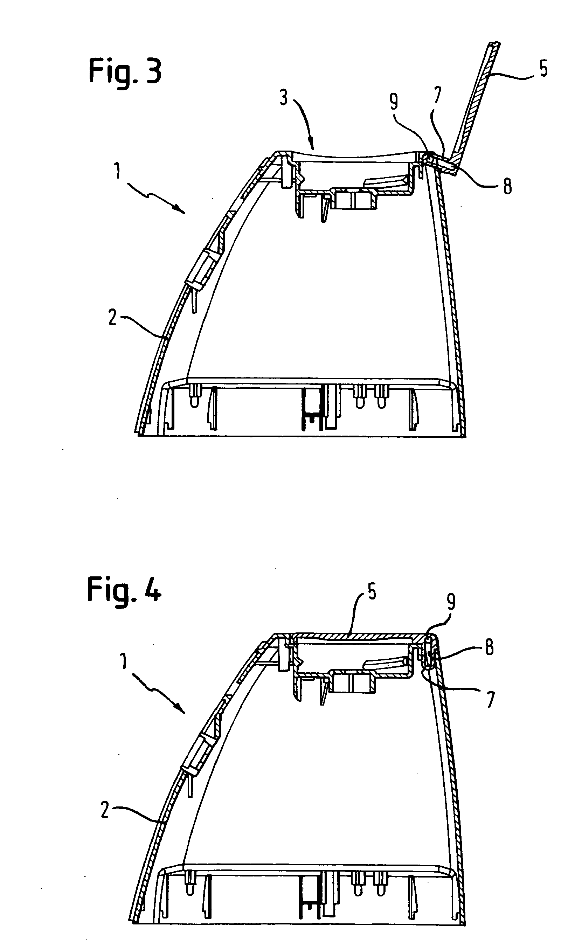

Die in Fig. 1 und 2 dargestellte Küchenmaschine 1 weist ein Gehäuse 2 mit einer ersten Ankupplungsstelle 3 für ein erstes Bearbeitungsgerät und einer zweiten Ankupplungsstelle 4 für ein zweites Bearbeitungsgerät auf. Die erste Ankupplungsstelle 3 ist mit einem Deckel 5 abdeckbar. Eine Verbindungseinrichtung verbindet den Deckel 5 mit dem Gehäuse 2. Die Verbindungseinrichtung umfasst zwei aus der Unterseite des Deckels 5 herausragende Vorsprünge 6, 7, die jeweils mit einem Langloch 8 versehen sind, von denen in den Figuren 1, 3 und 4 nur eines erkennbar ist. Das Gehäuse 2 ist mit zwei entsprechenden Zapfen 9 versehen, von denen ebenfalls in Fig. 1, 3 und 4 nur einer zu sehen ist. Der Deckel 5 ist folglich in Längsrichtung der Langlöcher 8 verschiebbar und um die Achse der Zapfen 9 schwenkbar. Am Rand des Deckels 5 in der Nähe der Verbindungseinrichtung befindet sich ein Griffabschnitt 10, an dem der Deckel 5 nach oben gezogen werden kann. Am gegenüberliegenden Rand des Deckels 5 ist ein zweiter Griffabschnitt 11 angeordnet, an dem der Deckel 5 in die geöffnete Stellung geschwenkt werden kann.

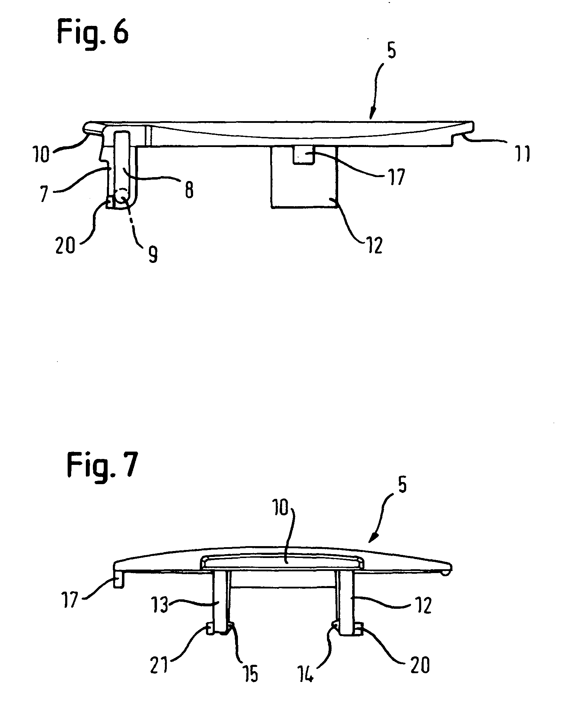

Der Deckel weist, wie besonders gut in Fig. 6 und 7 zu sehen, auf seiner Unterseite außerdem zwei Verankerungselemente 12, 13 auf, die an ihren vom Deckel 5 abgewandten Enden mit zueinander weisenden Vorsprüngen 14, 15 ausgestattet sind, die in entsprechende Kerben eines in Fig. 2 dargestellten Rückhalteelements 16 an der ersten Kupplungsstelle 3 eingreifen können, um den Deckel 5 in seiner geschlossenen Stellung lösbar am Gehäuse 2 zu fixieren.

An der ersten Kupplungsstelle 3 ragt eine (nicht dargestellte) Welle aus dem Gehäuse heraus, um ein Werkzeug des jeweiligen Bearbeitungsgeräts anzutreiben. Die Welle wird ihrerseits von eine Motor angetrieben, der sich in dem Gehäuseteil unterhalb der Kupplungsstelle 3 befindet. Das Werkzeug kann z.B. ein Rührbesen, ein Knethaken oder ein Messer sein. Damit ein Benutzer sich nicht an der rotierenden Welle oder an einem daran angebrachten Werkzeug verletzen kann, wenn auf die Kupplungsstelle 3 kein Bearbeitungsgerät aufgesetzt ist und auch der Deckel 5 nicht in seiner geschlossenen Stellung ist, weist die Küchenmaschine eine Schutzeinrichtung auf. Diese unterbricht die Stromzufuhr zum Motor bei fehlendem Bearbeitungsgerät und nicht geschlossenem Deckel 5. Um der Schutzeinrichtung anzuzeigen dass der Deckel 5 in der geschlossenen Stellung ist, ist dieser mit einem Vorsprung 17 ausgestattet, der mit einer Erfassungseinrichtung der Schutzeinrichtung zusammenwirkt. Dazu greift der Vorsprung 17, bei geschlossenem Deckel 5 durch eine Öffnung im Gehäuse 2, wo er von der Erfassungseinrichtung detektiert wird.

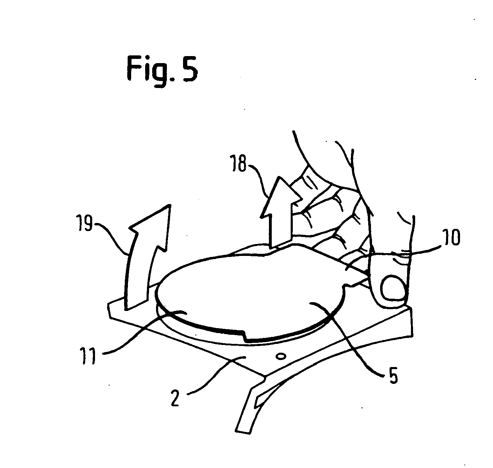

Fig. 5 erläutert, wie der Deckel 5 geöffnet wird. als erstes wird der Deckel 5 durch betätigen des ersten Griffabschnitts 10 in Richtung des Pfeils 18 aus der geschlossenen Stellung in eine Zwischenstellung gehoben. Dabei lösen sich die Vorsprünge 14, 15 der Verankerungselemente 12, 13 aus der Kerbe des Rückhalteelements 16. Die Verankerungselemente 12, 13 liegen jetzt locker auf der Oberkante des Rückhaltelements 16 aus. Außerdem ist jetzt der zweite Griffabschnitt 11 zugänglich. Anschließend wird der Deckel 5 durch Betätigen dieses Griffabschnitts 11 in Richtung des Pfeils 19 in die geöffnete Stellung geschwenkt.

Zum Schließen des Deckels 5 wird dieser zunächst von der geöffneten Stellung entgegen der Richtung des Pfeils 19 in die Zwischenstellung geschwenkt. Anschließen wird der Deckel 5 entgegen der Richtung des Pfeils 18 nach unten gedrückt, bis die Vorsprünge 14, 15 der Verankerungselemente 12, 13 in die Kerbe des Rückhalteelements 16 einrasten. Die in Fig. 6 dargestellten Vorsprünge 20, 21, die in geöffnetem Zustand des Deckels an jeweils an eine Kante des Gehäuses anschlagen, verhindern, dass der Deckel verschoben werden kann, bevor er in seine Zwischenstellung rotiert worden ist.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Die Küchenmaschine mit einem Deckel zum Abdecken einer Kupplungsstelle gemäß der vorliegenden Erfindung ist bequem zu handhaben, wobei insbesondere der Deckel nicht verloren gehen kann. Dennoch ist sie einfach und kostengünstig herzustellen.

## Patentansprüche

1. Küchenmaschine (1) mit einer Kupplungsstelle (3) zum Ankuppeln eines Bearbeitungsgeräts, einem Deckel (5) zum Abdecken der Kupplungsstelle (3) und einer Verbindungseinrichtung, über die der Deckel (5) mit einem Gehäuse (2) der Küchenmaschine (1) derart verbunden ist, dass er um eine Schwenkachse in eine offene Stellung, in der die Kupplungsstelle (3) zum Anbringen eines Bearbeitungsgeräts frei liegt, schwenkbar ist, **dadurch gekennzeichnet, dass** die Verbindungseinrichtung so angeordnet und eingerichtet ist, dass der Deckel(5) außerdem gegenüber dem Gehäuse (2) der Küchenmaschine (1) verschiebbar ist.

2. Küchenmaschine (1) nach Anspruch 1, **dadurch gekennzeichnet, dass** der Deckel (5) von einer Stellung, in der er die Kupplungseinrichtung (1) verschließt, in eine relativ zum Gehäuse (2) verschobene Zwischenstellung verschiebbar ist.

3. Küchenmaschine (1) nach Anspruch 2, **dadurch gekennzeichnet, dass** der Deckel (5) aus einer Stellung, in der er die Kupplungsstelle (3) verschließt, senkrecht zu seiner Ebene von der Kupplungsstelle (3) in die Zwischenstellung anhebbar ist.

4. Küchenmaschine (1) nach einem der vorherigen Ansprüche, **dadurch gekennzeichnet, dass** der Deckel (5) einen ersten Griffabschnitt (10) aufweist, der durch das Verschieben von außen zugänglich gemacht werden kann.

5. Küchenmaschine (1) nach einem der vorherigen Ansprüche, **dadurch gekennzeichnet, dass** an dem Deckel (5) ein zweiter Griffabschnitt (11) angeordnet ist, an den der Benutzer angreifen kann, um den Deckel (5) zu verschieben.

6. Küchenmaschine (1) nach einem der vorherigen Ansprüche, **dadurch gekennzeichnet, dass** die Verbindungseinrichtung einen Zapfen (9) auf dem einen Element aus der Gruppe Gehäuse (2) und Deckel (5) und ein Langloch (8) auf dem anderen der beiden Elemente aufweist, wobei der Zapfen (9) in das Langloch (8) eingreift, sodass die beiden Elemente um die Achse des Zapfens relativ zueinander verschwenkbar und in Längsrichtung des Langlochs (8) relativ zueinander verschiebbar sind.

7. Küchenmaschine (1) nach Anspruche 6, **dadurch gekennzeichnet, dass** das Langloch (8) am Deckel (5) angeordnet ist und der Zapfen (9) am Gehäuse (2).

8. Küchenmaschine (1) nach einem der Ansprüche 6 oder 7, **dadurch gekennzeichnet, dass** das Langloch (8) sich senkrecht zur Schwenkachse erstreckt, sodass der Zapfen (9) im Langloch (8) in eine Richtung senkrecht zur Schwenkachse verschiebbar ist.

9. Küchenmaschine (1) nach einem der Ansprüche 6 bis 8, **dadurch gekennzeichnet, dass** das Langloch (8) ein Durchloch ist.

10. Küchenmaschine (1) nach einem der Ansprüche 6 bis 9, **dadurch gekennzeichnet, dass** die Verbindungseinrichtung zwei Zapfen (9) auf dem einen Element aus der Gruppe Gehäuse (2) und Deckel (5) und zwei Langlöcher (8) auf dem anderen der beiden Elemente aufweist, in die je ein Zapfen (9) eingreift, sodass die beiden Elemente um die Achse des Langlochs (8) relativ zueinander verschwenkbar und in Längsrichtung des Langlochs (8) relativ zueinander verschiebbar sind.

11. Küchenmaschine (1) nach einem der vorherigen Ansprüche, **dadurch gekennzeichnet, dass** der Deckel (5) ein Verankerungselement (12, 13) aufweist und das Gehäuse ein Rückhalteelement (16), sodass das Verankerungselement (12, 13) bei geschlossenem Deckel (5) in das Rückhalteelement (16) greift, um den Deckel (5) lösbar in seiner geschlossenen Stellung zu fixieren.

12. Küchenmaschine (1) nach Anspruch 11, **dadurch gekennzeichnet, dass** das Verankerungselement (12, 13) von dem Rückhalteelement (16) durch Verschieben des Deckels (5) lösbar ist.

13. Küchenmaschine (1) nach einem der vorherigen Ansprüche, **dadurch gekennzeichnet, dass** an der Kupplungsstelle (3) eine Welle angeordnet ist, um ein Werkzeug des Bearbeitungsgeräts rotierend anzutreiben, und die Küchenmaschine (1) mit einem Schutzmechanismus ausgestattet ist, um zu vermeiden, dass die Welle betätigt wird, wenn die Kupplungsstelle (3) nicht durch ein Bearbeitungsgerät oder den Deckel (5) abgedeckt ist.

14. Küchenmaschine (1) nach Anspruch 13, **dadurch gekennzeichnet, dass** der Deckel (5) mit einem Vorsprung (17) ausgestattet ist, der bei geschlossenem Deckel (5) eine Erfassungseinrichtung des Schutzmechanismus betätigt, um diesem anzuzeigen, dass die Kupplungsstelle (3) abgedeckt ist.

15. Verfahren zum Öffnen eines Deckels (5) einer Kupplungsstelle (3) einer Küchenmaschine (1) für das Ankuppeln eines Beareitungsgeräts an eine Küchenmaschine (1) mit den Schritten:
- Verschieben des Deckels (5) relativ zu einem Gehäuse (1) der Küchenmaschine (1) aus seiner geschlossenen Stellung in eine Zwischenstellung; und
- Schwenken des Deckels (5) um eine Schwenkachse in eine offene Stellung, in der die Kupplungsstelle (3) zum Anbringen des Bearbeitungsgeräts frei liegt.

16. Verfahren zum Schließen eines Deckels (5) einer Kupplungsstelle einer Küchenmaschine (1) für das Ankuppeln eines Bearbeitungsgeräts an eine Küchenmaschine (1) mit den Schritten:
- Schwenken des Deckels (5) relativ zu einem Gehäuse (1) der Küchenmaschine um eine Schwenkachse von einer offenen Stellung, in der die Kupplungsstelle (3) zum Anbringen des Bearbeitungsgeräts frei liegt, in eine Zwischenstellung; und
- Verschieben des Deckels (5) von der Zwischenstellung in eine geschlossene Stellung.

## Claims

1. Food processor (1) with a coupling point (3) for the coupling of a processing apparatus, a cover (5) for covering the coupling point (3) and a connecting device by way of which the cover (5) is so connected with a housing (2) of the food processor (1) that it is pivotable about a pivot axis into an open setting in which the coupling point (3) is freed for mounting of a processing apparatus, **characterised in that** the connecting device is so arranged and provided that the cover (5) is in addition displaceable relative to the housing (2) of the food processor (1).

2. Food processor (1) according to claim 1, **characterised in that** the cover (5) is displaceable from a setting in which it closes the coupling device (1) into an intermediate setting displaced relative to the housing (2).

3. Food processor (1) according to claim 2, **characterised in that** the cover (5) can be raised from a setting, in which it closes the coupling point (3), perpendicularly to its plane from the coupling point (3) into the intermediate setting.

4. Food processor (1) according to any one of the preceding claims, **characterised in that** the cover (5) has a first grip section (10) which can be made externally accessible by the displacement.

5. Food processor (1) according to any one of the preceding claims, **characterised in that** a second grip section (11) able to be gripped by the user in order to displace the cover (5) is arranged at the cover (5).

6. Food processor (1) according to any one of the preceding claims, **characterised in that** the connecting device comprises a pin (9) on one element of the group consisting of housing (2) and cover (5) and a slot (8) on the other one of the two elements, wherein the pin (9) engages in the slot (8) so that the two elements are pivotable relative to one another about the axis of the pin and are displaceable relative to one another in longitudinal direction of the slot (8).

7. Food processor (1) according to claim 6, **characterised in that** the slot (8) is arranged at the cover (5) and the pin (9) is arranged at the housing (2).

8. Food processor (1) according to one of claims 6 and 7, **characterised in that** the slot (8) extends perpendicularly to the pivot axis so that the pin (9) is displaceable in the slot (8) in a direction perpendicular to the pivot axis.

9. Food processor (1) according to any one of claims 6 to 8, **characterised in that** the slot (8) is a through hole.

10. Food processor (1) according to any one of claims 6 to 9, **characterised in that** the connecting device comprises two pins (9) on one element of the group consisting of housing (2) and cover (5) and two slots (8) on the other one of the two elements, in each of which slots a respective pin (9) engages so that the two elements are pivotable relative to one another about the axis of the slot (8) and are displaceable relative to one another in the longitudinal direction of the slot (8).

11. Food processor (1) according to any one of the preceding claims, **characterised in that** the cover (5) has an anchoring element (12, 13) and the housing a retaining element (16) so that when the cover (5) is closed the anchoring element (12, 13) engages in the retaining element (16) in order to releasably fix the cover (5) in its closed setting.

12. Food processor (1) according to claim 11, **characterised in that** the anchoring element (12, 13) is releasable from the retaining element (16) by displacement of the cover (5).

13. Food processor (1) according to any one of the preceding claims, **characterised in that** a shaft is arranged at the coupling point (3) in order to rotationally drive a tool of the processing apparatus and the food processor (1) is provided with a protective mechanism in order to avoid actuation of the shaft when the coupling point (3) is not covered by a processing apparatus or the cover (5).

14. Food processor (1) according to claim 13, **characterised in that** the cover (5) is furnished with a projection (17) which when the cover (5) is closed actuates a grip device of the protective mechanism in order to indicate to this that the coupling point (3) is covered.

15. Method of opening a cover (5) of a coupling point (3) of a food processor (1) for the coupling of a processing apparatus to a food processor (1), comprising the steps:
- displacing the cover (5) relative to a housing (1) of the food processor (1) from its closed setting into an intermediate setting; and
- pivoting the cover (5) about a pivot axis into an open setting in which the coupling point (3) is freed for mounting of the processing apparatus.

16. Method of closing a cover (5) of a coupling point of a food processor (1) for the coupling of a processing tool to a food processor (1), comprising the steps:
- pivoting the cover (5) relative to a housing (1) of the food processor about a pivot axis from an open setting, in which the coupling point (3) is freed for mounting of the processing apparatus, into an intermediate setting; and
- displacing the cover (5) from the intermediate setting into a closed setting.

## Revendications

1. Robot ménager (1) comprenant un point d'accouplement (3) destiné à accoupler un appareil de traitement, un couvercle (5) destiné à recouvrir le point d'accouplement (3) et un dispositif de raccordement, par l'intermédiaire duquel le couvercle (5) est raccordé à un boîtier (2) du robot ménager (1) de manière à être pivotant autour d'un axe de pivotement dans une position ouverte, dans laquelle le point d'accouplement (3) est libre pour la mise en place d'un appareil de traitement, **caractérisé en ce que** le dispositif de raccordement est disposé et aménagé de manière à ce que le couvercle (5) soit en outre coulissant par rapport au boîtier (2) du robot ménager (1).

2. Robot ménager (1) selon la revendication 1, **caractérisé en ce que** le couvercle (5) est coulissant d'une position, dans laquelle il obture le point d'accouplement (3), en une position intermédiaire coulissée par rapport au boîtier (2).

3. Robot ménager (1) selon la revendication 2, **caractérisé en ce que** le couvercle (5) peut être soulevé à partir d'une position, dans laquelle il obture le point de d'accouplement (3), dans la position intermédiaire, perpendiculairement à sa surface, par le point d'accouplement (3).

4. Robot ménager (1) selon l'une quelconque des revendications précédentes,
**caractérisé en ce que** le couvercle (5) présente une première section de poignée (10) qui peut être rendue accessible de l'extérieur par le coulissement.

5. Robot ménager (1) selon l'une quelconque des revendications précédentes,
**caractérisé en ce qu'**une seconde section de poignée (11) est disposée sur le couvercle (5), sur laquelle l'utilisateur peut avoir prise afin de coulisser le couvercle (5).

6. Robot ménager (1) selon l'une quelconque des revendications précédentes,
**caractérisé en ce que** le dispositif de raccordement présente un tourillon (9) sur l'un des éléments constituant le sous-groupe boîtier (2) et couvercle (5) et un trou oblong (8) sur l'autre des deux éléments, le tourillon (9) ayant prise dans le trou oblong (8), de sorte que les deux éléments sont pivotants relativement l'un par rapport à l'autre autour de l'axe du tourillon et sont coulissants l'un par rapport à l'autre dans le sens longitudinal du trou oblong (8).

7. Robot ménager (1) selon la revendication 6, **caractérisé en ce que** le trou oblong (8) est disposé sur le couvercle (5) et le tourillon (9) sur le boîtier (2).

8. Robot ménager (1) selon l'une des revendications 6 ou 7, **caractérisé en ce que** le trou oblong (8) s'étend perpendiculairement à l'axe de pivotement, de sorte que le tourillon (9) est coulissant dans le trou oblong (8) dans une direction perpendiculaire à l'axe de pivotement.

9. Robot ménager (1) selon l'une quelconque des revendications 6 à 8, **caractérisé en ce que** le trou oblong (8) est un trou traversant.

10. Robot ménager (1) selon l'une quelconque des revendications 6 à 9, **caractérisé en ce que** le dispositif de raccordement présente deux tourillons (9) sur l'un des éléments constituant le sous-groupe boîtier (2) et couvercle (5) et deux trous oblongs (8) sur l'autre des deux éléments, dans lesquels un tourillon (9) a respectivement prise, de sorte que les deux éléments sont pivotants relativement l'un par rapport à l'autre autour de l'axe du tourillon et sont coulissants l'un par rapport à l'autre dans le sens longitudinal du trou oblong (8).

11. Robot ménager (1) selon l'une quelconque des revendications précédentes,
**caractérisé en ce que** le couvercle (5) présente un élément de fixation (12, 13) et le boîtier un élément de maintien (16), de sorte que l'élément de fixation (12, 13), lorsque le couvercle est fermé, a prise dans l'élément de maintien (16) afin de fixer le couvercle (5) de manière amovible dans sa position fermée.

12. Robot ménager (1) selon la revendication 11, **caractérisé en ce que** l'élément de fixation (12, 13) est détachable de l'élément de maintien (16) par coulissement du couvercle (5).

13. Robot ménager (1) selon l'une quelconque des revendications précédentes,
**caractérisé en ce qu'**un arbre est disposé au point d'accouplement (3) afin d'entraîner un outil de l'appareil de traitement de manière rotative, et **en ce que** le robot ménager (1) est équipé d'un mécanisme de protection afin d'éviter que l'arbre soit actionné lorsque le point d'accouplement (3) n'est pas recouvert par un appareil de traitement ou par le couvercle (5).

14. Robot ménager (1) selon la revendication 13, **caractérisé en ce que** le couvercle (5) est équipé d'une saillie (17) qui, lorsque le couvercle (5) est fermé, actionne un dispositif de détection du mécanisme de protection afin d'indiquer à celui-ci que le point d'accouplement (3) est recouvert.

15. Procédé d'ouverture d'un couvercle (5) d'un point d'accouplement (3) d'un robot ménager (1) pour l'accouplement d'un appareil de traitement à un robot ménager (1), comprenant les étapes :
- coulissement du couvercle (5), de manière relative par rapport à un boîtier (2) du robot ménager (1), de sa position fermée dans une position intermédiaire ; et
- pivotement du couvercle (5) autour d'un axe de pivotement dans une position ouverte, dans laquelle le point d'accouplement (3) est libre pour la mise en place d'un appareil de traitement.

16. Procédé de fermeture d'un couvercle (5) d'un point d'accouplement d'un robot ménager (1) pour l'accouplement d'un appareil de traitement à un robot ménager (1), comprenant les étapes :
- pivotement du couvercle (5), de manière relative par rapport à un boîtier (2) du robot ménager, autour d'un axe de pivotement d'une position ouverte, dans laquelle le point d'accouplement (3) est libre pour la mise en place d'un appareil de traitement, dans une position intermédiaire ; et
- coulissement du couvercle (5) de la position intermédiaire en une position fermée.
